# EUROPEAN PATENT SPECIFICATION

(11) **EP 4 467 576 B1**
(45) Date of publication and mention of the grant of the patent: **29.10.2025**
(21) Application number: 24177881.0
(22) Date of filing: 24.05.2024
(51) Int. Cl.: C08F 8/36, C09D 153/02, C08L 53/02, C08F 8/42, B01D 61/44, B01D 71/28, C25B 9/23, H01M 4/00, H01M 10/00, C25B 13/08, H01M 50/524, B01D 71/80

(54) **BLOCK COPOLYMER COMPOSITION AND APPLICATIONS THEREOF**
BLOCKCOPOLYMERZUSAMMENSETZUNG UND ANWENDUNGEN DAVON
COMPOSITION DE COPOLYMÈRE SÉQUENCÉ ET SES APPLICATIONS

(30) Priority: 26.05.2023 US 202363504455 P
(43) Date of publication of application: 27.11.2024
(73) Proprietor: Kraton Polymers Nederland B.V., 1322 CE Almere (NL)
(72) Inventor: Mhetar, Vijay, Houston, TX 77084 (US); Tochetto, Roger, Houston, TX 77084 (US); Jang, Sung Hoon, Houston, TX 77084 (US)
(74) Representative: Henkel & Partner mbB

(56) References cited:
- US-A- 3 471 431
- US-A1- 2020 067 101
- DOESCHER F ET AL: "SYNTHESIS OF SULFOALKYLATED STYRENE-DIVINYLBENZENE COPOLYMERS", MAKROMOLEKULARE CHEMIE, RAPID COMMUNICATIONS, HUTHIG UND WEPF VERLAG. BASEL, CH, vol. 1, no. 5, 2 May 1980 (1980-05-02), pages 297 - 302, XP002163969, DOI: 10.1002/MARC.1980.030010503

## Description

### FIELD

The disclosure relates to a metalated-sulfonated styrenic block copolymer composition, methods of preparation, and applications thereof.

### BACKGROUND

Cation exchange membrane (CEM) is a key component for many electrochemical devices, such as fuel cells and electrolyzers. However, the relatively low hydroxide conductivity, and insufficient long-term chemical and mechanical stabilities have been major barriers for wider adoptions of CEM-based technologies. To address those issues, various synthetic approaches have been explored to increase ion exchange capacity and to crosslink the membrane polymer. These approaches, however, typically require multiple synthetic steps to achieve the overall material design with tailorable functionality and improved mechanical properties.

The performance of the CEM depends on the type of materials used. Hydrogenated styrene-butadiene block copolymers (SEBS) and unhydrogenated styrenic block copolymer (USBC) have a great application prospect in phase separation and good alkali resistance due to the unique characteristics of alternating soft and hard blocks and an all-carbon main chain. USBCs have sufficiently reactive sites in the form of unsaturation. Functionalized SBCs serves as a precursor material, which provides excellent membrane processability. However, CEMs based on these polymers have challenges in terms of poor stability in basic environment, low ionic conductivity, and reduction in mechanical strength due to the water absorption and vulnerability of the main chain unsaturation.

Styrenic block copolymers (SBCs) can be functionalized to modify their characteristics for use as electrolytes in batteries. Electrolytes have many requirements similar to CEMs, e.g., thermal stability, high ion conductivity, and excellent electrochemical performance. US2020067101 discloses a method of producing particles of cathode active material lithium batteries, which comprises the steps of providing a solution containing a sulfonated elastomer dissolved in a solvent or a precursor, a monomer or oligomer to the sulfonated elastomer in a liquid form or dissolved in a solvent, of dispersing a plurality of particles of a cathode active material in the solution to form a slurry and of dispensing the slurry and removing said solvent and/or polymerizing/curing said precursor to form a powder mass. Furthermore, Döscher et al. describe in Makromol. Chem., Rapid Commun. 1 (1980), pages 297 to 302 a method of synthesizing sulfoalkylated styrene-divinylbenzene copolymers, wherein the copolymers are used as ion exchange resins on a large scale in water treatment, in the recovery of metals from aqueous solutions or in catalysis. Moreover, US3471431 discloses terminally sulfonated polymers, methods to prepare them, and latices made therefrom, wherein the latices comprise a continuous aqueous phase containing an alkali metal monocarboxylic acid soap and, as a discontinuous phase, 40 to 60% by weight of a polymer of the group consisting of elastomeric conjugated diene homopolymers, monovinyl arene homopolymers, elastomeric random copolymers of monovinyl arene with conjugated dienes and block copolymers of monovinyl arenes with conjugated dienes in which only one terminal of each polymer chain bears a sulfonic acid radical.

There is a need for improved functionalized block copolymer for various applications, e.g., battery electrolyte, CEM, etc., providing oxidative stability, high ion conductivity and electrochemical performance, and desired mechanical strength.

### SUMMARY

In one aspect, the disclosure relates to a metalated-sulfonated styrenic block copolymer comprising: any of a triblock, a tetrablock, a pentablock, and a coupled structure having a general configuration of: ABA, ABA', A'B'A'; ABB'A, ABA'A, ABB'A'; ABA'BA, AA'BA'A, ABABA, AA'BA'A, ABB'A'A, A'B'A'B'A'; (ABA)nX, (AB)nX, (BAB)nX, (ABAB)nX, (ABABA)nX, (A'B')n, (A'B')n(A'), (A'B'A')n, (A'B'A')nX, (A'B')nX, (B'A'B')nX, (A'B'A'B')nX, or (A'B'A'B'A')nX; wherein n is an integer from 2 to 30; and X is a residue of a coupling agent. Prior to hydrogenation, blocks B and B' are same or different and independently derived from any of 1,4-isoprene unit; 1,2-butadiene unit;1,4- butadiene unit, and mixtures thereof. Blocks A and A' are same or different and independently derived from any of (i) para-substituted vinyl aromatic monomer, or (ii) unsubstituted vinyl aromatic monomer. Each of the block B and B' is a mid-block and functionalized to have a metalated-sulfonated (SO₃⁻ M⁺) group in pendant chain according to formula (I): 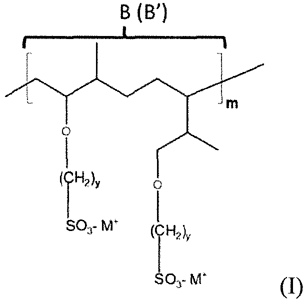 M⁺ is selected from the group consisting of: Na⁺, K⁺, Li⁺, Cs⁺, Ag⁺, Hg⁺ and Cu⁺; (CH₂)y is a spacer group, where y is 3-12. The metalated-sulfonated styrenic block copolymer has an ion exchange capacity (IEC) from 0.5 to 8.0 meq/g, according to ASTM D7131-05.

In another aspect, each block B and B' independently has a degree of metalation-sulfonation (SO₃⁻M⁺) ranging from 30 mol% to 100 mol%.

In still another aspect, the metalated -sulfonated styrenic block copolymer is a is a partially hydrogenated styrenic block copolymer obtained from a styrenic block copolymer precursor. The partially hydrogenated styrenic block copolymer has a residual unsaturation from 0.5-15 meq/g.

In yet another aspect, an energy storage device comprising the metalated - sulfonated styrenic block copolymer. The metalated -sulfonated styrenic block copolymer is applied as any of electrode binder, electrodes, separator, or electrolyte.

In another aspect, the energy storage device comprises a lithium-ion primary battery, a lithium -ion secondary battery, a capacitor, a supercapacitor, a fuel cell, a metal-sulfur battery, or a metal-air battery.

### DESCRIPTION

The following terms will have the following meanings:

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, or C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Block" as used herein refers to a section of a polymer molecule that comprises a plurality of identical constitutional units (monomers) and possesses at least one constitutional or configurative feature that does not appear in the immediately adjacent sections (blocks).

"Conjugated diene (CD)" refers to an organic compound containing conjugated carbon-carbon double bonds and a total of 4 to 12 carbon atoms, such as 4 to 8 carbon atoms, which can be any of 1,3-butadiene and substituted butadienes, including but not limited to 1,3 cyclohexadiene, isoprene, 2,3-dimethyl-1 ,3-butadiene, 1-phenyl-1,3-butadiene, 1,3-pentadiene, 3-butyl-1,3-octadiene, chloroprene, and piperylene, or any combination thereof. In embodiments, the conjugated diene block comprises a mixture of butadiene and isoprene monomers. In embodiments, 1,3-butadiene alone is used.

"Butadiene" refers to 1,3-butadiene or 1,4-butadiene.

"Monovinyl arene," or "monoalkenyl arene," or "vinyl aromatic" refers to an organic compound containing a single carbon-carbon double bond, at least one aromatic moiety, and a total of 8 to 18 carbon atoms, such as 8 to 12 carbon atoms. Examples include any of styrene, o-methyl styrene, p-methyl styrene, p-tertbutyl styrene, 2,4-dimethyl styrene, alpha-methyl styrene, vinylnaphthalene, vinyltoluene, vinylxylene, or mixtures thereof. In embodiments, the monoalkenyl arene block comprises a substantially pure monoalkenyl arene monomer. In some embodiment, styrene is the major component with minor proportions (less than 10 wt. %) of structurally related vinyl aromatic monomers such as o-methylstyrene, p-methyl styrene, p-tert-butyl styrene, 2,4- dimethyl styrene, a-methylstyrene, vinylnaphtalene, vinyltoluene, vinylxylene, or combinations thereof. In embodiments, styrene alone is used.

"Vinyl content" refers to the content of a conjugated diene that is polymerized via 1,2-addition in the case of butadiene, or via 3,4-addition in case of isoprene, resulting in a monosubstituted olefin, or vinyl group, adjacent to the polymer backbone. Vinyl content can be measured by nuclear magnetic resonance spectrometry (NMR).

"Coupling efficiency", expressed as % CE, is calculated using the values of the wt. % of the coupled polymer and the wt. % of the uncoupled polymer. The wt. % of the coupled polymer and the uncoupled polymer are determined using the output of the differential refractometer detector. The intensity of the signal at a specific elution volume is proportional to the amount of material of the molecular weight corresponding to a polystyrene standard detected at that elution volume.

"Coupling Agent" or "X" refers to the coupling agents commonly used in the making styrenic block copolymers SBC art. e.g., silane coupling agents such as isobutyl-trimethoxy silane, methyltrimethoxisilane; polyvinyl compounds, polyvinyl arene, di- or multivinylarene compounds; di- or multiepoxides; di- or multiisocyanates; di- or multialkoxysilanes; di- or multiimines; di-or multialdehydes; di- or multiketones; alkoxytin compounds; di- or multihalides, such as silicon halides and halosilanes; mono-, di-, or multianhydrides; di- or multiesters; tin tetrachloride; tetramethyl orthosilicate.

"Polystyrene content" or PSC of a block copolymer refers to the % weight of vinyl aromatic, e.g., polystyrene in the block copolymer, calculated by dividing the sum of molecular weight of all vinyl aromatic blocks by the total molecular weight of the block copolymer. PSC can be determined using any suitable methodology such as proton nuclear magnetic resonance (NMR).

"Molecular weight" or MW refers to the styrene equivalent molecular weight in kg/mol of a polymer block or a block copolymer. MW can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. MW of polymers measured using GPC so calibrated are styrene equivalent molecular weights or apparent molecular weights. MW expressed herein is measured at the peak of the GPC trace and is commonly referred to as styrene equivalent "peak molecular weights," designated as Mₚ.

"Residual Unsaturation (RU)" refers to the level of unsaturation, i.e., carbon-carbon double bonds per gram of block copolymer. RU can be measured using proton NMR.

"pHSBC" is used interchangeably with partial or partially hydrogenated styrenic block copolymer.

"Mid-block" refers to the block in a multiblock copolymer structure (e.g., SBCs) that is situated between the terminal blocks (or end-blocks). Mid-block may or may not be a central block, e.g., M (midblock) in a structure of AAMAA or AMAA, with "A" as the terminal or end-blocks.

"End-block" refers to the terminal blocks in a multiblock copolymer structure (e.g., SBCs), e.g., "A" in the example of "AMMA."

"Crosslinking", refers to the process of chemically joining two or more molecules by a covalent bond. It also refers to the process where, monomers capable of reacting with the functional groups on the polymer chain in the presence of an appropriate catalyst, results in graft-from growth of branching chains, some of which react with other chains of structure. The crosslinking step can be achieved by curing using a thermal or radiation treatment (UV) or using neutralization. Crosslinking reagents can contain reactive ends to specific functional groups (primary amines, acrylates, sulfides, etc.) on polymers or other molecules.

"Membrane" refers to a continuous, pliable sheet or layer of a material (film or coating etc.), which can function as a selective barrier allowing something, e.g., molecules, ions, gases, or particles, etc., to pass through but stops others.

"Cation exchange membrane" or "alkaline exchange membrane" or "CEM" refers to a semipermeable membrane generally made from ionomers and designed to conduct anions and repel cations.

"Cation exchange membrane electrolyzers" (CEMEL) refers to an electrolyzer with a polymer electrolyte membrane separating the anode from the cathode. The electrolyzers use electricity to split water (H₂O) into hydrogen and oxygen through an electrochemical reaction.

"Fuel Cell" refers to an electrochemical cell that converts the chemical energy of a fuel (e.g., hydrogen) and an oxidizing agent (e.g., oxygen) into electricity through a pair of redox reactions.

"Ion Exchange Capacity" or IEC refers to the total active sites or functional groups responsible for ion exchange in a polymer. A conventional acid-base titration method can be used to determine the IEC, see International Journal of Hydrogen Energy, Volume 39, Issue 10, March 26, 2014, Pages 5054-5062, "Determination of the ion exchange capacity of anion-selective membrane." IEC is the inverse of "equivalent weight" or EW, which is the weight of the polymer required to provide 1 mole of exchangeable protons.

"Li-ion battery" refers to a lithium-based energy storage system, but as used herein, the term also includes applications of other metals (M⁺) such as sodium, potassium, cesium, silver, mercury, copper etc., for use in energy storage system.

"Charging capacity" refers to a capacity obtained by the constant current charging at a current value until a certain cell voltage is reached.

"Discharge capacity" refers to discharging of the cell at a current value until the cell voltage reaches a certain value.

"Metalated-sulfonated block copolymer" or "SO₃⁻M⁺ -block copolymer" refers to a metalated-sulfonated styrenic block copolymer (SO₃⁻M⁺ -SBC), or a metalated-sulfonated partially hydrogenated styrenic block copolymer (SO₃Li-pHSBC). The term metalated-sulfonated block copolymer can be interchangeably used as SO₃Li-SBC or SO₃Li-pHSBC. Metal (M⁺) is any of Li, Na, K, Cs, Ag, Hg, or Cu.

The disclosure relates to a metalated-sulfonated styrenic block copolymer (SO₃⁻M⁺- SBC) composition. The SO₃⁻M⁺- SBC is obtained by i) hydrogenating SBC precursor followed by epoxidation, ii) alcoholysis of epoxidized-SBC, and iii) in-situ metalation and sulfonation. The SBC precursor can be any of a triblock, a tetrablock, a pentablock, or a coupled structure, with at least one of the blocks having metalated - sulfonated (SO₃⁻M⁺-) functionality. The SO₃⁻M⁺- SBCs are suitable for use as CEMs or CEM water electrolyzers.

Metalated-Sulfonated Block Copolymer (SO₃⁻M⁺-Block Copolymer):₃⁻M⁺- Block Copolymer) composition comprises, consists essentially of, or consists of a styrenic block copolymer (SBC) or a partially hydrogenated styrenic block copolymer p-HSBC) precursor that is epoxidized, hydrolyzed, and metalated-sulfonated to obtain SO₃⁻M⁺- SBC. In embodiments, p-HSBC is prepared from the SBC precursor. In embodiments, SO₃⁻M⁺- SBC is any of any of, a triblock, a tetrablock, a pentablock, or a coupled structure containing A, A', B, and B' blocks, wherein A, A' and B, B' are same or different. In all structures, each B or B' block is a mid-block and functionalized to have a metalated-sulfonated (SO₃⁻M⁺) moiety in the pendant chain according to formula (I).

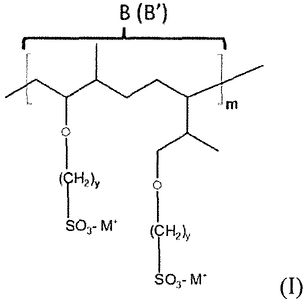

In formula (I), M⁺ is selected from the group consisting of: Na⁺, K⁺, Li⁺, Cs⁺, Ag⁺, Hg⁺ and Cu⁺, and (CH₂)_{y} is an alkyl spacer group, where y is 3-12. Preferably, M⁺ is any of Na⁺, K⁺, or Li⁺.

In embodiments, the SBC precursor or a base polymer is prepared by copolymerizing one or more olefins, including at least one conjugated diene, by themselves or with one or more monoalkenyl arene monomers. The copolymers may or may not be tapered, the individual blocks may be homopolymers or random copolymers, and the polymer molecule may be linear or branched.

In embodiments, the SBC precursor has a structure selected from the group of sequential diblock structures such as: S-CD, S-CD/CD', or S-CD/S, sequential triblock structures, such as S-CD-S, S-CD-CD', S'-CD-S' a tetrablock structures as S-CD-CD'-S, S-CD-S'-S, S-CD-CD'-S', a pentablock structure as S-CD-S'-CD-S, S-CD-S-CD-S, SS'-CD-S'S, S-CD-CD-'S'-S, S'-CD'-S'-CD'-S', or coupled structures such as (S-CD-S)nX, (S-CD)nX, (CD-S-CD)nX, (S-CD-S-CD)nX, (S-CD-S-CD-S)nX, (S'-CD'-S')nX, (S'-CD')nX, (S'-CD'-S'-CD')nX, or (S'-CD'-S'-CD'-S')nX, and mixtures thereof, , X is residue of a coupling agent. In embodiments, S and S' blocks are same or different and independently derived from any of (i) para-substituted vinyl aromatic monomer and (ii) unsubstituted vinyl aromatic monomer and each CD and CD' blocks are same or different and independently derived from 1,4-isoprene unit, 1,2- butadiene, 1,4- butadiene unit, and mixture thereof.

"n" refers the number of "arms" or "branches" in each of the structure, with n being an integer greater than 1. In embodiments, n ranges from 2-30, or 2-20, or 2-10, or 2-7.

In embodiments, each block S and S' independently is selected from the group consisting of: styrene, alpha-methyl styrene, methyl styrene, para-methyl styrene, ethyl styrene, propyl styrene, butyl styrene, tert-butyl styrene, dimethyl styrene, vinyl toluene, isomers of vinyl toluene, vinyl xylene, 1,1-vinyl biphenyl, vinyl naphthalene, vinyl anthracene, and mixtures thereof.

In embodiments, each block S and S' independently has a molecular weight (Mₚ) of 3 - 300, 5 - 250, or 10 - 200, or 3 - 150, or 5 - 225, or 20 - 220 kg/mol. In embodiments, the polymer blocks S and S' constitute ≤ 50, or 5 - 55, or 10 - 35, or 15 - 25, or 5 - 20, or 5 - 15, 5 - 20 wt.%, based on the total weight of the SBC.

In embodiments, each of polymer block CD and CD' independently comprises a polymer or copolymer of a conjugated diene monomer selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, piperylene, cyclohexadiene, and mixtures thereof.

In embodiments, each of polymer block CD and CD' independently has a molecular weight (Mₚ) of 2 - 350, or 5 - 300, or 7 - 250, or 10 - 200, or 5 - 150, or 3 - 100 kg/mol. In embodiments, the polymer blocks CD and CD' constitute from up to 100 wt.%, or 70 - 95, or 75 - 95, or 80 - 95, or 85 - 95, or 75 - 85, or 80 - 90, or ≥ 75 wt.%, based on total weight of the SBC.

Metalated-Sulfonated Styrenic Block Copolymer (SO₃⁻M⁺-SBC):ₙX, (AB)ₙX, (BAB)ₙX, (ABAB)ₙX, (ABABA)ₙX, (A'B'A')ₙX, (A'B')ₙX, (B'A'B')ₙX, (A'B'A'B')ₙX, or (A'B'A'B'A')ₙX; wherein n is an integer from 2 to 30; and X is a residue of a coupling agent. In embodiments, B and B' are the same or different and independently derived from any of 1,4-isoprene unit, 1,2- butadiene units, 1,4- butadiene units, and mixtures thereof. A and A' are same or different and independently derived from any of (i) para-substituted vinyl aromatic monomer or (ii) unsubstituted vinyl aromatic monomer.

In embodiments, block B or B' which is SO₃⁻M⁺ functionalized is produced from the hydrolyzed SBC in a Grignard Reaction, where the reactive nucleophile reacts with epoxide in an S_{N}2 type of reaction. The leaving group is the oxygen atom of the epoxide in the form of an alkoxide, which is converted to the alcohol on an acidic work-up.

In embodiments, the SBC is SO₃⁻M⁺ functionalized from a mixture of metal oxide and C₃-C₁₂ sultone compounds. Examples of metal oxides for the metalation step include lithium, cesium, sodium, potassium oxide, and mixtures thereof. Examples of sultones include those containing a carbon-oxygen-sulfur-carbon linkage in a ring, the hexavalent sulfur atom being further bonded to two additional oxygen atoms. In embodiments, the sultone used in functionalization contain 6-12 carbon atoms. These sultones are characterized by generation of a minimum of foaming. Examples include 1,3-propane sultone, 1,4-butane sultone, 1,3-butane sultone, long chain alkyl sultones (C₆-C₁₂), tolyl sultone, and mixtures thereof.

In embodiments, the SO₃⁻ M⁺-SBC is a triblock having a structure according to formula (II): 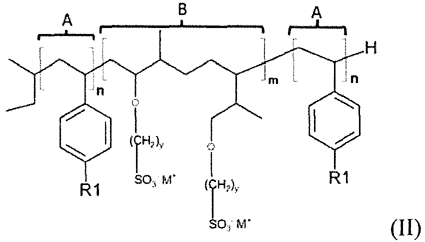 wherein R1 is H, CH3 or t-butyl group; m and n >1; A is an end block comprising polymerized para-substituted vinyl aromatic monomer; the mid-block B prior to functionalization consists of ethylene and butylene or propylene units.

In embodiments, polymer block B contains > 95 % of functionalized units. In embodiments, the SO₃⁻ M⁺-SBC of formula (II) has a weight ratio of the polymer block A to the polymer block B from 15:5 to 19:1, or 16:4 to 18:2. The degree of SO₃⁻M⁺-SBC functionalization in block copolymer of formula (I) ranges from 30 mol% to 95 mol%, or 15 - 80 mol%, or 20 - 70 mol%, or 25 - 60 mol%, or > 20 mol%, or > 50 mol%, based on the total number of monomer units.

In embodiments, SO₃⁻M⁺-SBC is a tetrablock having a general configuration of: ABB'A, ABA'A, and mixtures thereof.

In embodiments, SO₃⁻M⁺-SBC is a pentablock having a general configuration of: ABA'BA, AA'BA'A, ABABA, AA'BA'A, and mixtures thereof.

In embodiments, polymer blocks B and B' are mid-blocks and are same or different and independently derived from 1,4-isoprene unit, 1,2-butadiene, 1,4- butadiene unit, or mixture thereof. Blocks A and A' can be mid-blocks or end-blocks and are same or different and independently derived from any of i) para-substituted vinyl aromatic monomer, or ii) unsubstituted vinyl aromatic monomer.

Metalated-Sulfonated Partially Hydrogenated Styrenic Block Copolymer (SO₃⁻M⁺-pHSBC): In embodiments, the SBC precursor is partially hydrogenated before converting it into a SO₃⁻M⁺-pHSBC via series of steps similar discussed for making SO₃⁻M⁺-SBC. The partially hydrogenated styrenic block copolymer (pHSBC) is selected from the group consisting of: styrene-ethylene/butylene-styrene (S-E/B-S), styrene-ethylene/butylene-styrene-ethylene/butylene-styrene block copolymer (S-EB-S-EB-S), styrene- ethylene/butylene/styrene-styrene (S-EB/S-S), styrene-styrene/ethylene/butylene-styrene (S-S/EB-S), styrene-ethylene/butylene-styrene-ethylene/propylene-styrene block copolymer (S-EB-S-EP-S), styrene-ethylene/propylene-styrene-ethylene/propylene-styrene block copolymer (S-EP-S-EP-S), and mixtures thereof.

The SBC precursor is partially hydrogenated, meaning the hydrogenated conjugated diene has a hydrogenation level of 20-90%, or 25-85%, or > 20%, or > 40%, or < 70%, or < 80%, or < 85%, or 50-85%, or 55-80%, or 60-75%. Hydrogenation level refers to the percentage of original unsaturated bonds which become saturated upon hydrogenation. Level of hydrogenation in hydrogenated vinyl aromatic polymers can be determined using UV-VIS spectrophotometry and / or proton NMR. The hydrogenation level in hydrogenated diene polymers can be determined using proton NMR.

In embodiments, the block copolymer, which is partially hydrogenated, initially contains residual aliphatic double bonds in the polymer. The residual aliphatic double bonds provide excellent sites for reaction with a functional group. In embodiments, the partially hydrogenated conjugated diene has a residual unsaturation or RU of < 20 meq/g, or <15 meq/g, or < 10 meq/g, or < 8 meq/g, or > 3 meq/g, or < 5 meq/g, or 2-15 meq/g, or > 0.5 meq/g.

In embodiment, polymer block B and/or B' in the pHSBC, after hydrogenation (as derived from polymerized butadiene monomer or isoprene monomer) has RU of < 20 meq/g, or <15 meq/g, or < 10 meq/g, or < 8 meq/g, or > 3 meq/g, or < 5 meq/g, or 2-15 meq/g, or > 0.5 meq/g.

In embodiments, the pHSBC has an average 1,2-vinyl or 3,4-vinyl content of 5 - 75 wt. %, or 15 - 45 wt. %, or 20 - 40 wt. %, or 25 - 35 wt. %, or >35 wt. %, or < 50 wt. %. Vinyl content can be measured before or after hydrogenation, via proton NMR.

In embodiments, each of the polymer block B and B' has polymerized 1,2 and 1,3-butadiene units in an amount of 40 - 70, or 45 - 65, or 50 - 60, or > 45, or < 65 wt.%, based on total 1,3-butadiene units in the polymer block B.

In embodiments, each of the polymer block B and B' has polymerized 3,4 isoprene units in an amount of 5 - 15, or 6 - 12, or 5 - 10 wt.%, based on total isoprene units in the polymer block B.

In embodiments, pHSBC prior to hydrogenation has a polystyrene content of 0-40 wt.%, or 15-35 wt. %, or 8 - 30 wt.%, or < 45 wt. %, or < 40 wt.%.

In embodiments, the pHSBC prior to hydrogenation has a molecular weight (Mₚ) of 5 - 500, or 20 - 400, or 50 - 200, or 10 - 200, or 20 - 100, or 30 - 300 kg/mol.

In embodiments, the SO₃⁻M⁺-pHSBC copolymer has a triblock structure, with the block B or B' consisting of polymerized ethylene, butylene, or propylene units or mixture thereof, and with the block B or B' containing up to 20 % of unhydrogenated units which are not functionalized. In embodiments, the triblock SO₃⁻M⁺-pHSBC has a weight ratio of block A (and A') to block B (or B') ranging from 5:15 to 1:19, or 4:16 to 2:18.

### Optional Additives:

In embodiments, the SO₃⁻M⁺-SBC composition further comprises an optional additive selected from the group consisting of: activators, curing agents, crosslinking agents different from diamine based, stabilizers, neutralizing agents, thickeners, coalescing agents, slip agents, release agents, antiozonants, color change pH indicators, plasticizers, tackifiers, film forming additives, dyes, pigments, UV stabilizers, UV absorbers, other resins, redox couples, flame retardants, viscosity modifiers, wetting agents, deaerators, colorants, heat stabilizers, light stabilizers, lubricants, flow modifiers, drip retardants, antiblocking agents, antistatic agents, processing aids, stress-relief additives, binding agents, and mixtures thereof.

In embodiments, the optional additives further comprises low aspect ratio fillers to enhance toughness and comprehensive strength or to achieve controlled porosity in membranes. High aspect ratio fillers, on the other hand, are used to increase toughness and tensile strength in membranes that do not have a supporting structure.

In embodiments, the low aspect ratio fillers have an aspect ratio of < 5, or < 4, or < 3, or < 2 or < 1.5, or >1. The low aspect fillers are selected from the group consisting of alkali metal and alkaline earth metal carbonates, sulphates and phosphates, and mixtures thereof. Examples include calcium carbonate, sodium carbonate, barium sulphate, calcium sulphate, sodium sulphate, sodium phosphate, potassium phosphate, calcium phosphate, and mixtures thereof. In embodiments, the high aspect ratio fillers have an aspect ratio of 50-1500, or 200-1400, or 350-1350, or 400-1250, or 500-1100. The examples include silicate, alumina, carbon and mixtures thereof.

In embodiments, the additive is used in amounts of up to 10 wt.%, or 0.1 - 10, or 0.5 - 5, or 1 - 10, or 1 - 5 wt.%, based on total weight of the SO₃⁻ M⁺-SBC composition.

In embodiments, the SO₃⁻ M⁺-SBC further comprises at least a plasticizer, a high-dielectric constant solvent or a liquid electrolyte to facilitate an increase in ionic conductivity. Examples of plasticizers include bis(2-ethylhexyl) phthalate (BEHP), dibutyl phthalate (DBP), diisobutylphthalate (DIBP), or mixtures thereof. In embodiments, the high-dielectric constant solvent is selected from propylene carbonate (PC), ethylene carbonate (EC), diethyl carbonate (DEC), dimethyl carbonate (DMC), ethyl methyl carbonate (EMC), or mixtures thereof. In embodiments, a liquid electrolyte is formed by dissolving an electrolyte (i.e., lithium salt) such as LiPF6, LiBF4, LiClO4, LiTFSI in the high-dielectric constant solvent before adding to the SO₃⁻M⁺-SBC.

Optional Polymer Components: In embodiments, the SO₃⁻M⁺-SBC composition further blended with another polymer selected from the group consisting of polytetrafluoroethylenes (PTFEs), polyolefins, polyimides, polyamides, polyesters, polystyrenes, polysulfones, polyketones, poly(2,6 dimethyl 1,4 phenylene)ether, poly(p-phenylene oxide) (PPO), polyphenylene ethers, polyisoprenes, polybutadienes, polyvinylidene fluorides, polycarbonates, polyetherimides, ethylene-vinyl alcohol copolymers, polyvinylidene chlorides, polyacrylates, polytertbutylstyrene, and mixtures thereof.

The molecular weight of the optional polymer component can be tailored to obtain the miscibility between the SO₃⁻M⁺-SBC and the 2^{nd} (optional) polymer. In embodiments, the optional polymer component is selected from PPO having a molecular weight ranging from 1 to 15 kg/mol, or 2 to 12 kg/mol, 7-9 kg/mol, or 10-12 kg/mol. In embodiments, the ratio of the MW of the second (optional) polymer and the MW of the A block ranging from 5:1 to 1:2, or 4:1 to 3:1, or 2:1 to 1:1.

In embodiments, the 2^{nd} polymer for blending with the SO₃⁻ M⁺-SBC is present in an amount from 0.1- 50 wt.%, or 1-35 wt.%, or 5- 30 wt.%, or > 15 wt.%, or < 25 wt.%, or 15-25 wt.%, relative to the weight of a polystyrene block of SO₃⁻ M⁺-SBC.

### Acidifier:

In embodiments, the SO₃⁻M⁺-SBC is further acidified with a strong acid solution selected from a group consists of: hydrochloric acid (HCL), hydrobromic acid (HBr), nitric acid (HNO3), hydroiodic acid (HI), chloric acid (HCLO3), sulfuric acid (H2SO4), and mixtures thereof to obtain a SO₃H functionalization in SBC. In embodiments, the degree of sulfonation in the block copolymer ranges from 30 mol% to 95 mol%, or 15 - 80 mol%, or 20 - 70 mol%, or 25 - 60 mol%, or > 20 mol%, or > 50 mol%, based on the total number of monomers units.

Method for forming SO₃⁻M⁺-Block Copolymer: The SO₃⁻M⁺ functionalized block copolymer can be formed in a series of reaction steps. In embodiments, a precursor SBC is provided, or prepared by known methods. The precursor can be prepared by sequential (or successive) polymerization of the monomers in solution (in solvent) in the presence of an initiator, with stepwise addition of monomer and initiator, followed by hydrogenation (or partial hydrogenation). The precursor can be prepared by coupling the resulting block copolymers with a coupling agent before the hydrogenation step.

In embodiments, an epoxidized SBC is provided, or the SBC precursor (as provided or prepared) are epoxidized (e-SBC) by known methods. In embodiments, epoxidation of SBC is carried out with a peracid, exemplified by peracetic acid, hydrogen peroxide in the presence of acetic acid and sulfuric acid, or hydrogen peroxide in the presence of a low molecular weight fatty acid such as formic acid. Relatively low temperatures are utilized, e.g., 25-40 °C, and reaction times of 0.5 to 4 hours are usually sufficient for effecting the high degree of epoxidation desired in the conjugated diene polymer block.

In embodiments, e-SBC has a degree of epoxidation of 1-90%, or 1-99, or 3-95 %, or 5-90%, or 10-85%, or 10-80%, or 10-75%, 10-60%, 15-50%, or > 15%, or > 20%, relative to the polymer block susceptible to functionalization, i.e., the block B. The amount of epoxy in e-SBC can be measured by titration, FTIR, or 1HNMR.

The amount of the functionalization /epoxidizing agent added to the base block copolymer (hydrogenated SBC) varies based on the desired level of functionalization. In embodiments, the epoxidizing agent is added in an amount ranging from 0.1 - 20, or 0.5 - 15, or 1 - 12, or 2 - 10 wt.%, based on the total weight of the base block copolymer.

In embodiments, epoxidized base polymers (e-SBC) has a degree of epoxidation of up to 100, or 1 - 99, or 5 - 90, or 10 - 80, or 20 - 70, or 30 - 90, or 40 - 80, or > 40, or > 50%, relative to the polymer block susceptible to functionalization.

In embodiments, the alcoholysis of the e-SBC is carried out by reacting the e-SBC with a Grignard reagent, e.g., R-MgBr via S_{N}2 type reaction to produce a hydroxyl-SBC copolymer. The hydroxyl-SBC copolymer is then converted to SO₃⁻M⁺- SBC block copolymer by reacting in-situ with a mixture of metal oxide and sultone in a ratio of 10:90, or 20:80, or 30:70, or 40:60, or 50:50, in an organic solvent or mixtures thereof. Examples of solvents include n-hexane, cyclohexane, methylene chloride, ethylene chlorides, isopropyl alcohol, acetone, N, N-dimethylacetamide, 1-methyl-2-pyrrolidinone, 1,3-dioxolane, 2-methoxy ethanol, dimethylformamide, benzyl alcohol, and mixtures thereof.

The SO₃⁻M⁺-SBC is further acidified with a strong acid solution to obtain a SO₃H functionalization.

In embodiments, the SO₃⁻M⁺-SBC can be used as flakes, or in solution (in solvents), or as pellets to prepare the final applications. In embodiments, SO₃⁻M⁺-SBC in solution can also be made into films, or membranes for subsequent use in final applications.

Membranes or Films Containing SO₃⁻M⁺-SBC: In embodiments, the SO₃⁻M⁺-SBC as formed is dissolved in a solvent for subsequent use to make into membranes or films. Examples of solvents include: n-hexane, cyclohexane, methylene chloride, ethylene chlorides, isopropyl alcohol, acetone, N, N-dimethylacetamide, 1-methyl-2-pyrrolidinone, 1,3-dioxolane, 2-methoxy ethanol, dimethylformamide, benzyl alcohol, toluene, xylene, dimethyl sulfoxide and mixtures thereof.

In embodiments, in addition to SO₃⁻M⁺-SBC polymer, an optional component including a cross-linking agent, additives, polymers other than alkyl halide substituted SBC, etc., can also be used / added to the solvent to form the membrane / film.

In embodiments, a membrane (film) is formed by the know methods such as casting, electrospinning, extrusion, compression, coating, such as dipping, flow coating, roll coating, bar coating, spray coating, curtain, rotogravure, brushing, wire wound rod coating, pan fed reverse roll coating, nip-fed coating, spraying, knife coating, spin coating, immersion coating, slot-die coating, ultrasonic spray coating, printing, film transfer, and the like. The film can be dried at 20 °C -210 °C, or 30 - 180 °C, or 35 - 150 °C, or 40- 100 °C with or without vacuum in a continuous or batch process. In embodiments, the film is a standalone film or supported by an ion permeable substrate, e.g., glass, carbon or other woven or non-woven mat, polymeric or filled polymeric, plastic films, ceramic, porcelain porous rigid substrates and the like.

In another embodiment, a membrane (film) is formed directly on the electrode of the energy storage device by using methods such as: casting, electrospinning, extrusion, compression, coating, such as dipping, flow coating, roll coating, bar coating, spray coating, curtain, rotogravure, brushing, wire wound rod coating, pan fed reverse roll coating, nip-fed coating, spraying, knife coating, spin coating, immersion coating, slot-die coating, ultrasonic spray coating, printing, film transfer, and the like. In case of Lithium-ion battery, membrane (film) can be formed directly on cathode or anode. Suitable electrodes are cathodes made with materials such as Lithium nickel manganese cobalt oxide (NMC) or Lithium Iron Phosphate and anodes made with materials such as graphite, silicon-containing graphite, and Lithium metal.

In embodiments, the SO₃⁻H-SBC membrane has a thickness of 0.1 - 500 µm, or 1 - 200 µm, or 50 - 300 µm, or 3 - 100 µm, or 1 - 50 µm, or 5 - 45 µm, or 5 - 40 µm, or 20 - 150 µm, or 12 - 25 µm, or > 0.1 µm, or < 50 µm.

### Further Processing of SO3⁻H-SBC Membranes or Films:

In embodiments, the SO₃⁻H-SBC is crosslinked with a crosslinking agent e.g., glycols, polyethylene glycol (PEG) etc. The amount of SO₃⁻H-SBC to cross-linking agent is in the ratio of 98:2to- 95:5, or 90:10to-80:20, or 75:25to70:30, or 60:40 to 55:35 mol%. In embodiments, SO₃⁻H-SBC is dissolved in a binary mixture of toluene/isopropanol and cross-linking agent is dissolved in a toluene solution separately. The two solvent systems mixed together and cast onto a substrate to form a film or membrane.

Properties: The film/membrane obtained from the SO₃⁻H-SBC or SO₃⁻M⁺SBC, or from polyethylene-glycol (PEG) crosslinked SO₃⁻H-SBC is elastic and has a low swell property. The film is highly dimensionally stable, has high ion transport characteristics, methanol resistance, barrier properties, hardness, thermal / oxidative stability, and anti-fouling properties.

In embodiments, the SO₃⁻M⁺-SBC film has an ion exchange capacity (IEC) of 0.5 - 3.5, or 1.2 - 3.0, or 1.5 - 3, or > 1, or < 2, or < 3, or > 0.5 meq/g.

In embodiments, the cross-linked film of SO₃⁻H-SBC and PEG has an ion exchange capacity (IEC) of 1.0 - 3.5, or 1.2 - 3.0, or 1.5 - 3, or > 1, or < 2, or < 3, or > 0.5 meq/g.

In embodiments, the SO₃⁻M⁺-SBC film has a Young's modulus of 100 - 2000, or 500 - 1000, or 600 - 800 MPa.

In embodiments, the cross-linked film of SO₃⁻H-SBC and PEG has a Young's modulus of 100 - 2000, or 500 - 1000, or 600 - 800 MPa.

In embodiments, the SO₃⁻M⁺SBC film has a tensile strength of 2 - 30, or 7 - 25, or 10 - 20, or 5 - 20, or 7 - 18, or 10 - 25 MPa.

In embodiments, the cross-linked film of SO₃⁻H-SBC and PEG has a tensile strength of 2 - 30, or 7 - 25, or 10 - 20, or 5 - 20, or 7 - 18, or 10 - 25 MPa.

In embodiments, the SO₃⁻M⁺-SBC film has a toughness of 1 - 8, or 1.5 - 6, or 1 - 5 MJ/m³.

In embodiments, the cross-linked film of SO₃⁻H-SBC and PEG has a toughness of 1 - 8, or 1.5 - 6, or 1 - 5 MJ/m³.

In embodiments, the SO₃⁻M⁺-SBC film has an elongation at break of 10 - 150%, or > 100 %, or <150 %, or > 20%, or >35%, or 15-50%, or 25-75%, or 35-90%.

In embodiments, the cross-linked film of SO₃⁻H-SBC and PEG has an elongation at break of 10 - 150%, or > 100 %, or <150 %, or > 20%, or >35%, or 15-50%, or 25-75%, or 35-90%.

In embodiments, the SO₃⁻M⁺SBC film has a water uptake capacity (or swelling) after 24 hrs. (weight gain at 80 °C de-ionized water) of 5 - 100, or 10 - 90, or 20 - 80, or 30 - 60, or 10 - 50, or 30 - 80 wt.%, based on total initial weight of the film (before soaking the film in water).

In embodiments, the crosslinked film of SO₃⁻H-SBC and PEG has a water uptake capacity (after 24 hrs.) of 5 - 100, or 10 - 90, or 20 - 80, or 30 - 60, or 10 - 50, or 30 - 80 wt.%, based on total initial weight of the film.

In embodiments, the SO₃⁻M⁺SBC film has a swellability after 1 week in 80°C de-ionized water of: < 70%, or < 90%, or < 100%, or < 120%, or < 150%, or < 200%, or < 250%, or between 40 - 300%, or 50 - 250%, or 60 - 220, or 70 - 200%, or 80 - 180%, or 100 - 160%, based on total initial weight of the film.

In embodiments, the cross-linked copolymer film of SO₃⁻H-SBC and PEG has a swellability after 1 week in 80°C de-ionized water of: < 70%, or < 90%, or < 100%, or < 120%, or < 150%, or < 200%, or < 250%, or between 40 - 300%, or 50 - 250%, or 60 - 220, or 70 - 200%, or 80 - 180%, or 100 - 160%, based on total initial weight of the film.

### (Properties of Li-Ion Battery Containing SO₃⁻M⁺SBC Film):

The film of SO₃⁻M⁺SBC composition (where M⁺ = Li⁺) when used in a battery / cell is expected to show an excellent discharge capacity.

In embodiments, a Li-ion battery containing the SO₃⁻M⁺-SBC film has an electrochemical stability of 1 - 12 V, or 2 - 10 V, or 2.5 - 8V, or 3 - 6 V, or 3.5 - 5.5V, or 4 - 7V, or > 4V, or < 10 V. Electrochemical stability refers to a control of an open circuit voltage of the polymer electrolyte.

In embodiments, the Li-ion battery has a retention capacity of > 80%, or > 85%, or > 90%, or > 95%, or > 97%, or < 99.5%, after at least 1000 charge / discharge cycles at room temperature with respect to the first cycle. The retention capacity of the Li-ion battery refers to a full charge or discharge capacity of a battery obtained after the battery is used for a certain period or left unused for a prolonged period.

Applications: The acidified-sulfonated block copolymer composition (SO₃⁻H-SBC) can be used in applications including electrochemical, such as in water electrolyzers, cation exchange membranes for fuel cells, membrane electrode assemblies, acid batteries (electrolyte separator), supercapacitors (electrolyte); separation cell (electrolyte barrier) for metal recovery processes; sensors (particularly for sensing humidity); energy storage solutions such as in vanadium or iron redox flow battery membrane.

In embodiments, the SO₃⁻H-SBC composition is for use in energy storage devices including flow batteries, hydrogen production, CEM for water electrolysis, water splitting, etc.

In embodiments, the SO₃⁻M⁺-SBC composition is for use as components of energy storage devices, e.g., in any of current collectors, electrodes or separators (as binders). In embodiments, the SO₃⁻M⁺-SBC is coated or deposited onto a porous separator. In other embodiments, the SO₃⁻M⁺-SBC layer is coated on at least one side of the separator. In yet another embodiment, both sides of the separator are coated with the same or different SO₃⁻M⁺-SBC compositions.

### Examples: The following examples are intended to be non-limiting.

The following tests were used:
Epoxide ring-opening reaction and subsequent quaternization reaction was characterized by FT-IR (Nicolet-iS-50 FTIR spectrometer with an attenuated total reflection (ATR) accessory). The film was directly put onto the ATR diamond and spectra were recorded at room temperature.

The epoxide ring opening reaction was further characterized by differential scanning calorimetry (DSC) using TA Instruments Q2000 from -75 °C- 250 °C.

Mechanical properties, including toughness, Young's modulus, tensile strength, and elongation at break measured according to ASTM D412.

The components used in the examples include:
Precursor USBC is for use in making partially hydrogenated styrenic block copolymers (p-HSBC) precursor. USBC, p-HSBC-1, p-HSBC-2, at different PSC content (polystyrene), residual unsaturation (RU) levels, and MFR, are as provided in Table 1 of the SBC used in the Examples.

**Table 1**

| Polymer | Structure | RU (meq /g) | Total MW (kg/mol) | Vinyl content % | PSC % | MFR g/10 min | MFR (conditions) |
|---|---|---|---|---|---|---|---|
| USBC | SBS | - | 120 | 37 | 20 | 10 | 230 °C/2.16 Kg |
| pHSBC-1 | SBBS | 2.1 | 120 | 37 | 20 | 10 | 230 °C/2.16 Kg |
| pHSBC-2 | SBBS | 4.0 | 110 | 24 | 30 | 4 | 230 °C/5 Kg |

Example 1- Epoxidation of SBC: The SBC in table 1 was dissolved in cyclohexane at temperature of 40 °C. The formic acid level was varied to control the level of epoxidation. A 1.0:0.5 molar solution of formic acid and hydrogen peroxide was reacted first to form performic acid. The solution was added to the SBC in cyclohexane and stirred for 1 hour. The reaction was carried out in a batch reactor operating at 60°C, reaction time of 3 to 4 hours. All the reactions were immediately neutralized with sodium bicarbonate to avoid secondary reactions. Reaction mixture was washed twice with 10 % aqueous sodium bicarbonate. The polymer was precipitated in isopropyl alcohol (IPA), washed, and analysed by ¹HNMR to determine the epoxy content.

Each of the product obtained (from epoxidizing the SBCs of Table 1) is referred to as epoxidized e-SBC.

Example 2 -Hydroxy- SBC: 6 g of e-SBC (the 3 epoxidized e-SBC products obtained from Example 1) was dissolved in 250 ml THF. The reaction mixture then cooled down to 10 °C under N2. 0.67 g of CuCl₂ was added to the cooling reaction mixture and stirred well for 10 min. 22.2 ml of CH₃MgBr was added slowly to the stirred reaction mixture (temp. raises to 25-30 °C). Stirring continued for 3 hrs. and then quench the reaction mixture with 100 ml of 10% AlCl3. The solution was acidified with 1.5N HCL, extraction with dichloromethane and subsequent washing yields a crude product which is precipitated in methanal and dried well to get Hydroxy- SBC.

Example 3- Lithiation and Sulfonation of Hydroxy- SBC: For the 3 products in example 2, 3 g of Hydroxy SBC was dissolved in 200 ml THF followed by 30 min stirring. 6 ml of lithium tert-butoxide was added to the stirred solution with stirring continued for 1 hr at 60-70 °C. After overnight stirring, 1.05 ml of 1,3 propane sultone was added at 60-70 °C. Reaction mixture was cooled to a room temperature. Solvent was evaporated to obtain SO₃⁻Li⁺-SBC, which was then dissolved in a methanol solution. Solution was then casted onto a substrate to form a film or membrane.

Example 4- SO₃⁻H-SBC from SO₃⁻Li⁺-SBC: Each of the reaction product SO₃⁻Li⁺-SBC in THF obtained in Example 3 was mixed with 1.5 N HCL and stirred for 3-4 hrs. THF was distilled under vacuum and the viscous product was precipitated in methanol, dried under vacuum to obtain the SO₃⁻H-SBC product. The product was then dissolved in a methanol solution and casted onto a substrate to form a film or membrane.

Example 5 - SO₃⁻H-SBC Crosslinking of with PEG 1000: A solution of SO₃⁻H-SBC is prepared by dissolving suitable amount of SO₃⁻H-SBC in toluene/isopropanol solvent. Suitable amount of a cross-linking agent PEG 1000 is dissolved separately in a toluene solution. The two solvent systems are mixed together by stirring for sufficient amount of time (30 min). The solvent is casted onto a substrate to form a film or membrane.

Example 6 -PPO Blending with SO₃⁻M⁺-SBC-A blend of PPO and SO₃⁻M⁺-SBC is prepared by dissolving PPO and SO₃⁻M⁺-SBC samples separately in a suitable ratio (wt.% of PPO to wt.% polystyrene (PS) component of e-SBC) in chloroform solution. First, the solution of PPO in chloroform is prepared and stirred enough to ensure complete solubility. This solution is added to the premixed chloroform solution of SO₃⁻M⁺-SBC samples. The solution is stirred further to ensure complete solubility. The mixed chloroform solution is casted onto a substrate, followed by solvent evaporation to form a film.

Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A metalated-sulfonated styrenic block copolymer comprising: any of a triblock, a tetrablock, a pentablock, and a coupled structure, each structure having a general configuration of:
ABA, ABA', A'B'A';
ABB'A, ABA'A, ABB'A';
ABA'BA, AA'BA'A, ABABA, AA'BA'A, ABB'A'A, A'B'A'B'A';
(ABA)ₙX, (AB)ₙX, (BAB)ₙX, (ABAB)ₙX, (ABABA)ₙX, (A'B')ₙ, (A'B')ₙ(A'), (A'B'A')ₙ, (A'B'A')ₙX, (A'B')nX, (B'A'B')ₙX, (A'B'A'B')nX, or (A'B'A'B'A')ₙX;
wherein:
n is an integer from 2 to 30; and X is a residue of a coupling agent;
prior to hydrogenation B and B' are same or different and independently derived from any of 1,4-isoprene unit, 1,2-butadiene unit, 1,4- butadiene unit, and mixtures thereof;
blocks A and A' are same or different and independently derived from any of (i) para-substituted vinyl aromatic monomer, or (ii) unsubstituted vinyl aromatic monomer;
each of the block B and B' is a mid-block and functionalized to have a metalated-sulfonated (SO₃⁻M⁺) group in pendant chain according to formula (I): 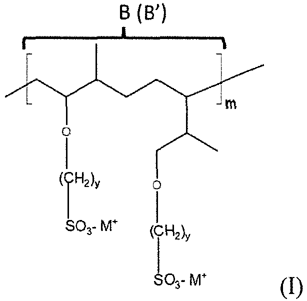
M⁺ is selected from the group consisting of: Na⁺, K⁺, Li⁺, Cs⁺, Ag⁺, Hg⁺ and Cu⁺;
(CH2)_{y} is a spacer group, where y is 3-12; and
wherein the metalated-sulfonated styrenic block copolymer has an ion exchange capacity (IEC) from 0.5 to 8.0 meq/g, measured according to ASTM D7131-05.

2. The metalated -sulfonated styrenic block copolymer of claim 1, wherein, the block B and B' each independently has a degree of metalation-sulfonation (SO₃⁻M⁺) ranging from 30 to 100 mol%.

3. The metalated -sulfonated styrenic block copolymer of any of claims 1-2, wherein the metalated-sulfonated styrenic block copolymer is a triblock having a structure according to formula (II): 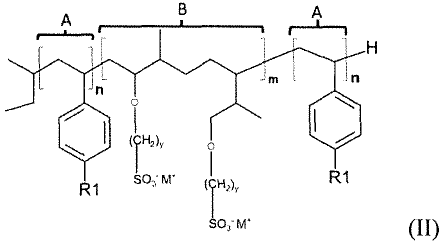
R¹ is H, CH₃ or t-butyl group;
m and n >1;
the block A is an end block comprising polymerized para-substituted vinyl aromatic monomer;
the mid-block B prior to functionalization consists of ethylene and butylene or propylene units.

4. The metalated -sulfonated styrenic block copolymer of any of claims 1-2, wherein the metalated-sulfonated styrenic block copolymer is a tetrablock having a general configuration of: ABB'A, ABA'A, ABB'A', and mixtures thereof;
wherein the blocks A and A' are same or different polymer mid-blocks or end-blocks and independently derived from any of (i) para-substituted vinyl aromatic monomer, or (ii) unsubstituted vinyl aromatic monomer.

5. The metalated -sulfonated styrenic block copolymer of any of claims 1-2, wherein the metalated-sulfonated styrenic block copolymer is a pentablock having a general configuration of: ABA'BA, AA'BA'A, ABABA, AA'BA'A, ABB'A'A, A'B'A'B'A', and mixtures thereof;
wherein the blocks A and A' are mid-blocks or end-blocks and are same or different and independently derived from any of (i) para-substituted vinyl aromatic monomer, or (ii) unsubstituted vinyl aromatic monomer.

6. The metalated -sulfonated styrenic block copolymer of any of claims 1-2, wherein the metalated -sulfonated styrenic block copolymer is obtained by sulfonating and metalating a styrenic block copolymer precursor having a general configuration of:
S-CD-S, S-CD-CD', S'-CD-S';
S-CD-CD'-S, S-CD-S'-S, S-CD-CD'-S';
S-CD-S'-CD-S, S-CD-S-CD-S, SS'-CD-S'S, S-CD-CD'-S'-S, S'-CD'-S'-CD'-S', (S-CD-S)ₙX, (S-CD)ₙX, (CD-S-CD)ₙX, (S-CD-S-CD)ₙX, (S-CD-S-CD-S)ₙX, (S'-CD'-S')ₙX, (S'-CD')ₙX, (S'-CD'-S'-CD')ₙX, or (S'-CD'-S'-CD'-S')ₙX;
wherein:
n is an integer from 2 to 30;
X is a residue of a coupling agent;
CD and CD' are same or different and independently derived from any of 1,4-isoprene unit, 1,2 - butadiene units, 1,4- butadiene units, or mixture thereof; and
S and S' are same or different and independently derived from any of (i) para-substituted vinyl aromatic monomer, or (ii) unsubstituted vinyl aromatic monomer.

7. The metalated -sulfonated styrenic block copolymer of claim 6, wherein M⁺ is Li⁺, wherein the metalated-sulfonated styrenic block copolymer is obtained by sulfonating and lithiating the styrenic block copolymer precursor.

8. The metalated -sulfonated styrenic block copolymer of claim 6, wherein the styrenic block copolymer precursor is a partially hydrogenated styrenic block copolymer;
wherein the partially hydrogenated styrenic block copolymer has a residual unsaturation from 0.5-15 meq/g.

9. The metalated -sulfonated styrenic block copolymer of any of claims 1-2, wherein the CH₂ spacer group with C₃-C₁₂ carbon atoms is derived from:
a sultone selected from the group consisting of 1,3-propane sultone, 1,4-butane sultone, 1,3-butane sultone, C₆-C₁₂ alkyl sultones, tolyl sultone, and mixtures thereof.

10. An energy storage device comprising the metalated -sulfonated styrenic block copolymer of any of claims 1-9, wherein the metalated -sulfonated styrenic block copolymer is applied as any of electrode binder, electrodes, separator, and electrolyte.

11. The energy storage device of claim 10, wherein the energy storage device is any of a lithium-ion primary battery, a lithium-ion secondary battery, a capacitor, a supercapacitor, a fuel cell, a metal-sulfur battery, sodium-ion battery, and a metal-air battery.

12. A film comprising the metalated -sulfonated styrenic block copolymer of any of claims 1-9.

13. The film of claim 12, wherein the film is applied on a microporous membrane comprising a polyolefin selected from the group consisting of: modified polyolefins, polyethylene, polypropylene, polymethylpentene, and mixtures thereof.

14. The metalated-sulfonated styrenic block copolymer of any of claims 1-2, wherein the metalated-sulfonated styrenic block copolymer is dissolved in a liquid electrolyte, the liquid electrolyte comprising a lithium salt dissolved in a solvent selected from the group consisting of: propylene carbonate, ethylene carbonate, diethyl carbonate, dimethyl carbonate, ethyl methyl carbonate, or mixtures thereof; and the lithium salt comprises LiPF₆, LiBF₄, LiClO₄, LiTFSI, and mixtures thereof.

15. A method to prepare a membrane for use in electrochemical applications, the method comprising:
acidifying the metalated -sulfonated styrenic block copolymer of any of claims 1-9 with an acid solution selected from a group consists of: hydrochloric acid, hydrobromic acid, nitric acid, hydroiodic acid, chloric acid, sulfuric acid, and mixtures thereof to form a sulfonated styrenic block copolymer;
crosslinking the sulfonated styrenic block copolymer with a polyethylene glycol;
casting a crosslinked sulfonated styrenic block copolymer to form a film;
wherein the film has a swellability in water, of < 250%, after 1 week, based on total initial weight of the film.

## Patentansprüche

1. Metalliertes-sulfoniertes Styrolblockcopolymer, umfassend: einen Triblock, einen Tetrablock, einen Pentablock oder eine gekoppelte Struktur, wobei jede Struktur eine allgemeine Konfiguration aufweist von:
ABA, ABA', A'B'A';
ABB'A, ABA'A, ABB'A';
ABA'BA, AA'BA'A, ABABA, AA'BA'A, ABB'A'A, A'B'A'B'A';
(ABA)ₙX, (AB)ₙX, (BAB)ₙX, (ABAB)ₙX, (ABABA)ₙX, (A'B')ₙ, (A'B')ₙ(A'), (A'B'A')ₙ, (A'B'A')ₙX, (A'B')ₙX, (B'A'B')ₙX, (A'B'A'B')ₙX oder (A'B'A'B'A')ₙX;
wobei:
n eine ganze Zahl von 2 bis 30 ist; und X ein Rest eines Kopplungsmittels ist;
vor der Hydrierung B und B' gleich oder unterschiedlich sind und unabhängig voneinander von einer 1,4-Isopreneinheit, einer 1,2-Butadieneinheit, einer 1,4-Butadieneinheit oder Gemischen davon abgeleitet sind;
die Blöcke A und A' gleich oder unterschiedlich sind und unabhängig voneinander von (i) einem para-substituierten vinylaromatischen Monomer oder (ii) einem unsubstituierten vinylaromatischen Monomer abgeleitet sind;
jeder der Blöcke B und B' ein Mittelblock und so funktionalisiert ist, dass er eine metallierte-sulfonierte (So₃⁻M⁺)-Gruppe in einer Seitenkette gemäß Formel (1) aufweist: 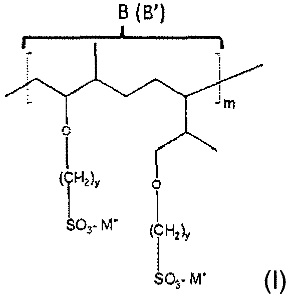
M⁺ ausgewählt ist aus der Gruppe bestehend aus: Na⁺, K⁺, Li⁺, Cs⁺, Ag⁺, Hg⁺ and Cu⁺;
(CH2)_{y} eine Spacergruppe ist, wobei y 3-12 ist; und
wobei das metallierte-sulfonierte Styrolblockcopolymer eine Ionenaustauschkapazität (IEC) von 0,5 bis 8,0 meq/g, gemessen gemäß ASTM D7131-05, aufweist.

2. Metalliertes-sulfoniertes Styrolblockcopolymer nach Anspruch 1, wobei die Blöcke B und B' jeweils unabhängig voneinander einen Grad der Metallierung-Sulfonierung (SO₃⁻M⁺) im Bereich von 30 bis 100 Mol-% aufweisen.

3. Metalliertes-sulfoniertes Styrolblockcopolymer nach einem der Ansprüche 1 bis 2, wobei das metallierte-sulfonierte Styrolblockcopolymer ein Triblock mit einer Struktur gemäß Formel (II) ist: 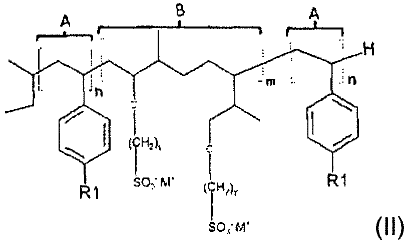
R¹ H, CH₃ oder eine t-Butylgruppe ist;
m und n > 1;
der Block A ein Endblock ist, der ein polymerisiertes para-substituiertes vinylaromatisches Monomer umfasst;
der Mittelblock B vor der Funktionalisierung aus Ethylen- und Butylen- oder Propyleneinheiten besteht.

4. Metalliertes-sulfoniertes Styrolblockcopolymer nach einem der Ansprüche 1 bis 2, wobei das metallierte-sulfonierte Styrolblockcopolymer ein Tetrablock mit einer allgemeinen Konfiguration von: ABB'A, ABA'A, ABB'A und Gemischen davon ist;
wobei die Blöcke A und A' gleiche oder unterschiedliche Polymermittelblöcke oder Endblöcke und unabhängig voneinander von (i) einem para-substituierten vinylaromatischen Monomer oder (ii) einem unsubstituierten vinylaromatischen Monomer abgeleitet sind.

5. Metalliertes-sulfoniertes Styrolblockcopolymer nach einem der Ansprüche 1 bis 2, wobei das metallierte-sulfonierte Styrolblockcopolymer ein Pentablock mit einer allgemeinen Konfiguration von: ABA'BA, AA'BA'A, ABABA, AA'BA'A, ABB'A'A, A'B'A'B'A' und Gemischen davon ist;
wobei die Blöcke A und A' Mittelblöcke oder Endblöcke sind und gleich oder unterschiedlich und unabhängig voneinander von (i) einem para-substituierten vinylaromatischen Monomer oder (ii) einem unsubstituierten vinylaromatischen Monomer abgeleitet sind.

6. Metalliertes-sulfoniertes Styrolblockcopolymer nach einem der Ansprüche 1 bis 2, wobei das metallierte-sulfonierte Styrolblockcopolymer durch Sulfonierung und Metallierung eines Styrolblockcopolymervorläufers mit einer allgemeinen Konfiguration von:
S-CD-S, S-CD-CD', S'-CD-S';
S-CD-CD'-S, S-CD-S'-S, S-CD-CD'-S';
S-CD-S'-CD-S, S-CD-S-CD-S, SS'-CD-S'S, S-CD-CD'-S'-S, S'-CD'-S'-CD'-S', (S-CD-S)ₙX, (S-CD)ₙX, (CD-S-CD)ₙX, (S-CD-S-CD)ₙX, (S-CD-S-CD-S)ₙX, (S'-CD'-S')ₙX, (S'-CD')ₙX, (S'-CD'-S'-CD')ₙX oder (S'-CD'-S'-CD'-S')ₙX;
wobei:
n eine ganze Zahl von 2 bis 30 ist;
X ein Rest eines Kopplungsmittels ist;
CD und CD' gleich oder unterschiedlich und unabhängig voneinander von einer 1,4-Isopreneinheit, 1,2-Butadieneinheiten, 1,4-Butadieneinheiten oder einem Gemisch davon abgeleitet sind; und
S und S' gleich oder unterschiedlich und unabhängig voneinander von (i) einem para-substituierten vinylaromatischen Monomer oder (ii) einem unsubstituierten vinylaromatischen Monomer abgeleitet sind.

7. Metalliertes-sulfoniertes Styrolblockcopolymer nach Anspruch 6, wobei M⁺ Li⁺ ist, wobei das metallierte-sulfonierte Styrolblockcopolymer durch Sulfonierung und Lithiierung des Styrolblockcopolymervorläufers erhalten wird.

8. Metalliertes-sulfoniertes Styrolblockcopolymer nach Anspruch 6, wobei der Styrolblockcopolymervorläufer ein teilweise hydriertes Styrolblockcopolymer ist;
wobei das teilweise hydrierte Styrolblockcopolymer eine restliche Ungesättigtheit von 0,5 bis 15 meq/g aufweist.

9. Metalliertes-sulfoniertes Styrolblockcopolymer nach einem der Ansprüche 1 bis 2, wobei die CH₂-Spacergruppe mit C₃-C₁₂-Kohlenstoffatomen abgeleitet ist von:
einem Sulton ausgewählt aus der Gruppe bestehend aus 1,3-Propansulton, 1,4-Butansulton, 1,3-Butansulton, C₆-C₁₂-Alkylsultonen, Tolylsulton und Gemischen davon.

10. Energiespeichervorrichtung, umfassend das metallierte-sulfonierte Styrolblockcopolymer nach einem der Ansprüche 1 bis 9, wobei das metallierte-sulfonierte Styrolblockcopolymer als Elektrodenbindemittel, Elektroden, Separator oder Elektrolyt verwendet wird.

11. Energiespeichervorrichtung nach Anspruch 10, wobei die Energiespeichervorrichtung eine Lithium-Ionen-Primärbatterie, eine Lithium-Ionen-Sekundärbatterie, ein Kondensator, ein Superkondensator, eine Brennstoffzelle, eine Metall-Schwefel-Batterie, eine Natrium-Ionen-Batterie oder eine Metall-Luft-Batterie ist.

12. Film, umfassend das metallierte-sulfonierte Styrolblockcopolymer nach einem der Ansprüche 1 bis 9.

13. Film nach Anspruch 12, wobei der Film auf eine mikroporöse Membran aufgebracht ist, die ein Polyolefin umfasst, ausgewählt aus der Gruppe bestehend aus: modifizierten Polyolefinen, Polyethylen, Polypropylen, Polymethylpenten und Gemischen davon.

14. Metalliertes-sulfoniertes Styrolblockcopolymer nach einem der Ansprüche 1 bis 2, wobei das metallierte-sulfonierte Styrolblockcopolymer in einem flüssigen Elektrolyten gelöst ist, wobei der flüssige Elektrolyt ein Lithiumsalz umfasst, das in einem Lösungsmittel gelöst ist, das ausgewählt ist aus der Gruppe bestehend aus: Propylencarbonat, Ethylencarbonat, Diethylcarbonat, Dimethylcarbonat, Ethylmethylcarbonat oder Gemischen davon; und das Lithiumsalz LiPF₆, LiBF₄, LiClO₄, LiTFSI und Gemischen davon umfasst.

15. Verfahren zur Herstellung einer Membran zur Verwendung in elektrochemischen Anwendungen, wobei das Verfahren umfasst:
Ansäuern des metallierten-sulfonierten Styrolblockcopolymers nach einem der Ansprüche 1 bis 9 mit einer Säurelösung, ausgewählt aus einer Gruppe bestehend aus: Salzsäure, Bromwasserstoffsäure, Salpetersäure,
lodwasserstoffsäure, Chlorsäure, Schwefelsäure und Gemischen davon, um ein sulfoniertes Styrolblockcopolymer auszubilden;
Vernetzen des sulfonierten Styrolblockcopolymers mit einem Polyethylenglykol; Gießen eines vernetzten sulfonierten Styrolblockcopolymers, um einen Film auszubilden;
wobei die Folie nach 1 Woche eine Quellfähigkeit in Wasser von < 250 %, bezogen auf das Anfangsgewicht des Films, aufweist.

## Revendications

1. Copolymère séquencé styrénique métallé-sulfoné comprenant : l'une quelconque d'une tri-séquence, d'une tétra-séquence, d'une penta-séquence et d'une structure couplée, chaque structure présentant une configuration générale de :
ABA, ABA', A'B'A' ;
ABB'A, ABA'A, ABB'A' ;
ABA'BA, AA'BA'A, ABABA, AA'BA'A, ABB'A'A, A'B'A'B'A' ;
(ABA)ₙX, (AB)ₙX, (BAB)ₙX, (ABAB)ₙX, (ABABA)ₙX, (A'B')ₙ, (A'B')ₙ(A'), (A'B'A')ₙ, (A'B'A')ₙX, (A'B')ₙX, (B'A'B')ₙX, (A'B'A'B')ₙX, ou (A'B' A' B' A' ) ₙX ;
dans lequel :
n est un nombre entier de 2 à 30 ; et X est un résidu d'agent de couplage ;
avant hydrogénation, B et B' sont identiques ou différentes et sont issues indépendamment de l'un quelconque du motif 1,4-isoprène, du motif 1,2-butadiène, du motif 1,4-butadiène et des mélanges de ceux-ci ;
les séquences A et A' sont identiques ou différentes et sont issues indépendamment de l'un quelconque de (i) un monomère aromatique vinylique para-substitué, ou (ii) un monomère aromatique vinylique non substitué ;
chacune des séquences B et B' est une séquence intermédiaire et fonctionnalisée pour présenter un groupe métallé-sulfoné (SO₃⁻M⁺) dans la chaîne pendante selon la formule (I) : 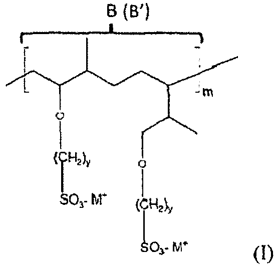
M⁺ étant sélectionné dans le groupe consistant en : Na⁺, K⁺, Li⁺, Cs⁺, Ag⁺, Hg⁺ et Cu⁺ ;
(CH2)_{y} est un groupe espaceur, dans lequel y est 3-12 ; et
dans lequel le copolymère séquencé styrénique métallé-sulfoné présente une capacité d'échange d'ions (IEC) de 0,5 à 8,0 meq/g, mesurée selon la norme ASTM D7131-05.

2. Copolymère séquencé styrénique métallé-sulfoné selon la revendication 1, dans lequel les séquences B et B' présentent chacune indépendamment un degré de métallation-sulphonation (SO₃⁻M⁺) allant de 30 à 100 % en moles.

3. Copolymère séquencé styrénique métallé-sulfoné selon l'une quelconque des revendications 1-2, dans lequel le copolymère séquencé styrénique métallé-sulfoné est une tri-séquence présentant une structure selon la formule (II) : 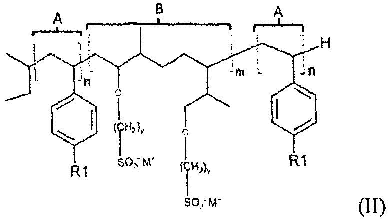
R¹ est H, CH₃ ou un groupe t-butyle ;
m et n >1 ;
la séquence A est une séquence terminale comprenant un monomère aromatique vinylique para-substitué polymérisé ;
la séquence intermédiaire B avant fonctionnalisation consiste en des motifs éthylène et butylène ou propylène.

4. Copolymère séquencé styrénique métallé-sulfoné selon l'une quelconque des revendications 1-2, dans lequel le copolymère séquencé styrénique métallé-sulfoné est une tétra-séquence présentant une configuration générale de : ABB'A, ABA'A, ABB'A' et des mélanges de celles-ci ;
dans lequel les séquences A et A' sont des séquences intermédiaires ou des séquences terminales polymères identiques ou différentes et sont indépendamment issues de l'un quelconque de (i) un monomère aromatique vinylique para-substitué, ou (ii) un monomère aromatique vinylique non substitué.

5. Copolymère séquencé styrénique métallé-sulfoné selon l'une quelconque des revendications 1-2, dans lequel le copolymère séquencé styrénique métallé-sulfoné est une penta-séquence présentant une configuration générale de : ABA'BA, AA'BA'A, ABABA, AA'BA'A, ABB'A'A, A'B'A'B'A', et des mélanges de celles-ci ;
dans lequel les séquences A et A' sont des séquences intermédiaires ou des séquences terminales et sont identiques ou différentes et indépendamment issues de l'un quelconque de (i) un monomère aromatique vinylique para-substitué, ou (ii) un monomère aromatique vinylique non substitué.

6. Copolymère séquencé styrénique métallé-sulfoné selon l'une quelconque des revendications 1-2, dans lequel le copolymère séquencé styrénique métallé-sulfoné est obtenu par sulphonation et métallation d'un précurseur copolymère séquencé styrénique présentant une configuration générale de :
S-CD-S, S-CD-CD', S'-CD-S' ;
S-CD-CD'-S, S-CD-S'-S, S-CD-CD'-S' ;
S-CD-S'-CD-S, S-CD-S-CD-S, SS'-CD-S'S, S-CD-CD'-S'-S, S'-CD'-S'-CD'-S', (S-CD-S)ₙX, (S-CD)ₙX, (CD-S-CD)ₙX, (S-CD-S-CD)ₙX, (S-CD-S-CD-S)ₙX,
(S'-CD'-S')ₙX, (S'-CD')ₙX, (S'-CD'-S'-CD')ₙX, or (S'-CD'-S'-CD'-S')ₙX ;
dans lequel :
n est un nombre entier de 2 à 30 ;
X est un résidu d'un agent de couplage ;
CD et CD' sont identiques ou différentes et sont issues indépendamment de l'un quelconque du motif 1,4-isoprène, du motif 1,2-butadiène, du motif 1,4-butadiène ou d'un mélange de ceux-ci ; et
S et S' sont identiques ou différentes et sont issues indépendamment de l'un quelconque de (i) un monomère aromatique vinylique para-substitué, ou (ii) un monomère aromatique vinylique non substitué.

7. Copolymère séquencé styrénique métallé-sulfoné selon la revendication 6, dans lequel M⁺ est Li⁺, dans lequel le copolymère séquencé styrénique métallé-sulfoné est obtenu par sulphonation et lithiation du précurseur copolymère séquencé styrénique.

8. Copolymère séquencé styrénique métallé-sulfoné selon la revendication 6, dans lequel le précurseur copolymère séquencé styrénique est un copolymère séquencé styrénique partiellement hydrogéné ;
dans lequel le copolymère séquencé styrénique partiellement hydrogéné présente une insaturation résiduelle de 0,5-15 meq/g.

9. Copolymère séquencé styrénique métallé-sulfoné selon l'une quelconque des revendications 1-2, dans lequel le groupe espaceur CH₂ avec des atomes de carbone en C₃-C₁₂ est issu de : une sultone sélectionnée dans le groupe consistant en la 1,3-propane sultone, la 1,4-butane sultone, la 1,3-butane sultone, les alkyle en C₆-C₁₂-sultones, la tolyl sultone et des mélanges de celles-ci.

10. Dispositif de stockage d'énergie comprenant le copolymère séquencé styrénique-métallé-sulfoné selon l'une quelconque des revendications 1-9, dans lequel le copolymère séquencé styrénique-métallé-sulfoné est appliqué en tant que l'un quelconque parmi un liant pour électrode, des électrodes, un séparateur et un électrolyte.

11. Dispositif de stockage d'énergie selon la revendication 10, dans lequel le dispositif de stockage d'énergie est l'un quelconque parmi une batterie primaire lithium-ion, une batterie secondaire lithium-ion, un condensateur, un supercondensateur, une pile à combustible, une batterie métal-soufre, une batterie sodium-ion et une batterie métal-air.

12. Film comprenant le copolymère séquencé styrénique métallé-sulfoné selon l'une quelconque des revendications 1-9.

13. Film selon la revendication 12, dans lequel le film est appliqué sur une membrane microporeuse comprenant une polyoléfine sélectionnée dans le groupe consistant en : des polyoléfines modifiées, du polyéthylène, du polypropylène, du polyméthylpentène ou des mélanges de ceux-ci.

14. Copolymère séquencé styrénique métallé-sulfoné selon l'une quelconque des revendications 1-2, dans lequel le copolymère séquencé styrénique métallé-sulfoné est dissous dans un électrolyte liquide, l'électrolyte liquide comprenant un sel de lithium dissous dans un solvant sélectionné dans le groupe consistant en : le carbonate de propylène, le carbonate d'éthylène, le carbonate de diéthyle, le carbonate de diméthyle, le carbonate d'éthyle et de méthyle, ou des mélanges de ceux-ci ; et le sel de lithium comprend LiPF₆, LiBF₄, LiClO₄, LiTFSI, et des mélanges de ceux-ci.

15. Procédé de préparation d'une membrane pour utilisation dans des applications électrochimiques, le procédé comprenant :
l'acidification du copolymère séquencé styrénique métallé-sulfoné selon l'une quelconque des revendications 1-9 avec une solution acide sélectionnée dans un groupe consistant en : l'acide chlorhydrique, l'acide bromhydrique, l'acide nitrique, l'acide iodhydrique, l'acide chlorique, l'acide sulfurique et des mélanges de ceux-ci pour former un copolymère séquencé styrénique sulfoné ;
la réticulation du copolymère séquencé styrénique sulfoné avec un polyéthylène glycol ;
la coulée d'un copolymère séquencé styrénique sulfoné réticulé pour former un film ;
dans lequel le film présente une aptitude au gonflement dans l'eau, < 250 %, après 1 semaine, sur la base du poids initial total du film.
